# NEUE EUROPÄISCHE PATENTSCHRIFT

(11) **EP 2 049 363 B2**
(45) Veröffentlichungstag und Bekanntmachung des Hinweises auf die Entscheidung über den Einspruch: **18.11.2015**
(45) Hinweis auf die Patenterteilung: 22.05.2013
(21) Anmeldenummer: 07802230.8
(22) Anmeldetag: 08.09.2007
(51) Int. Cl.: B60N 2/56

(54) **AKTIV BELÜFTETER FAHRZEUGSITZ**
ACTIVELY VENTILATED VEHICLE SEAT
SIEGE A AERATION ACTIVE POUR VEHICULE

(30) Priorität: 06.10.2006 DE 102006047370
(43) Veröffentlichungstag der Anmeldung: 22.04.2009
(73) Patentinhaber: Bayerische Motoren Werke Aktiengesellschaft, 80809 München (DE)
(72) Erfinder: LEIN, Rudolf, 85221 Dachau (DE); PUDENZ, Christian, 80809 München (DE)
(86) Internationale Anmeldenummer: PCT/EP2007/007851
(87) Internationale Veröffentlichungsnummer: WO 2008/043416

(56) Entgegenhaltungen:
- EP-A- 1 364 827
- DE-A1- 10 152 768
- DE-A1-102004 001 912
- DE-A1-102004 050 779
- DE-C1- 10 024 879
- DE-C1- 10 156 658

## Beschreibung

Die Erfindung betrifft einen aktiv belüfteten Fahrzeugsitz mit einem unteren, luftundurchlässigen Sitz- oder Rückenlehnen-Polsterteil einer auf diesem angeordneten, luftdurchfluteten Zwischenschicht und einem durch Abheftungen in voneinander abgegrenzte Polsterzonen unterteilten, seitens der Zwischenschicht luftdurchströmten Pölsterbezug, nach dem Oberbegriff des Patentanspruchs 1, gemäß der aus der DE 10 2004 001 912 A1 bekannten Art.

Bei einem aktiv belüfteten Fahrzeugsitz der aus der DE 100 24 879 C1 bekannten Art, die die Merkmale des Oberbegriffs des Anspruchs 1 beinhaltet, sind die Abheftungen als Steppnähte in dem luftdurchlässigen, aus einer Weichschaumschicht und der Stoffbespannung bestehenden Polsterbezug ausgebildet. Dabei ist die Einzugstiefe der Abheftungen auf die Dicke des Polsterbezugs beschränkt und ferner fehlt eine lastfeste Verankerung der Abheftungen am unteren Polsterteil.

Weiterhin ist aus der EP 1 364 827 B1 ein aktiv belüfteter Kraftfahrzeugsitz bekannt, bei dem der Polsterbezug auf dem Wege über die luftdurchflutete Zwischenschicht in der Weise am unteren Polsterteil befestigt ist, dass in Längsrichtung der Abheftungen verteilt Stehbolzen am unteren Polsterteil verschraubt sind, die die Zwischenschicht durchgreifen und mit in den Polsterbezug eingezogenen Abheftstangen lösbar verhakt sind. Hierdurch werden zwar stärkere Einschnürungen der luftführenden Zwischenschicht im Bereich der Abheftungen vermieden, jedoch wird der Sitzkomfort durch die nach oben über die Zwischenschicht ragenden Stehbolzen erheblich beeinträchtigt.

Schließlich sind bei dem aus der DE 101 56 658 C1 bekannten Fahrzeugsitz der eingangs genannten Art, bei dem die luftdurchflutete Zwischenschicht längs der Abheftungen in einzelne, lüftungsmäßig voneinander getrennte Teilstücke aufgeteilt ist, Einlegestreifen in Form von Abstandsgewirken versenkt im unteren Polsterteil angeordnet, die längenkonform zu den Abheftungen unterhalb der abheftseitigen Randabschnitte der Zwischenschicht verlaufen und als Luftbrücken zwischen diesen wirken. Erzeugt werden die Abheftungen durch Zugdrähte, die sich durch die Einlegestreifen erstrecken und im unteren Polsterteil verankert sind. Die Herstellung und Anordnung der luftbrückenbildenden Einlegestreifen erfordert jedoch einen erhöhten Fertigungsaufwand, und da die Einlegestreifen durch die einwirkenden Zugkräfte der Abheftdrähte querschnittsverengend zusammengepresst werden, kann es zu Behinderungen des Luftaustausches zwischen den einzelnen Teilstücken der Zwischenschicht kommen.

Aufgabe der Erfindung ist es, bei einem Fahrzeugsitz der beanspruchten Art auf fertigungstechnisch einfache Weise und ohne Beeinträchtigung des Sitzkomforts eine unbehinderte Sitzbelüftung und eine dauerhaft sichere Fixierung der Abheftungen zu erzielen.

Diese Aufgabe wird erfindungsgemäß durch einen Fahrzeugsitz mit den Merkmalen des Patentanspruchs 1 gelöst.

Erfindungsgemäß sind die Luftbrücken der luftführenden Zwischenschicht rundum von dem Material des Polsterteils umschlossen und die Abheftungen sind oberhalb der Luftbrücken an den diese abdeckenden Wandabschnitten des Polsterteils verankert. Hierdurch wird eine dauerhaft zug- und rutschfeste Befestigung des Polsterbezugs längs der Abheftungen sichergestellt, ohne dass die Luftbrücken mit den aus der Abheftung resultierenden Spannkräften querschnittsverengend belastet werden. Dies ergibt eine ungehinderte Luftdürchflutung der Zwischenschicht auf dem Wege über die Luftbrücken bei gleichzeitig hohem Sitzkomfort in Verbindung mit einer herstellungsmäßig einfachen, langzeitstabilen Sitzkonstruktion.

In weiterer, herstellungsmäßig bevorzugter Ausgestaltung der Erfindung sind die Luftbrücken und die Zwischenschicht als einstückiger Zuschnitt, und zwar erfindungsgemäß aus einem Abstandsgewirke, vorgefertigt.

Im Hinblick auf eine besonders sichere Befestigung der Abheftungen am luftundurchlässigen Polsterteil empfiehlt es sich, diese an einem sich durchgehend längs der Abheftungen im Polsterteil oberhalb der Luftbrücken erstreckenden Abheftelement zu verankern.

Vorzugsweise besteht das luftundurchlässige Polsterteil aus einem Schaumstoff, und um zu verhindern, dass der Schaumstoff beim Schäumprozess in die von diesem umströmten Luftbrücken eindringt und dadurch die Luftführung in den Luftbrücken behindert oder gar blockiert, sind die schaumstoffseitigen Kontaktflächen der Luftbrücken vorteilhafterweise schaumundurchlässig gestaltet.

Die Erfindung wird nunmehr anhand eines Ausführungsbeispiels in Verbindung mit den Zeichnungen näher erläutert. Es zeigen in stark schematisierter Darstellung:
- **Fig. 1**: eine perspektivische Darstellung eines aktiv belüfteten Fahrzeugsitzes nach der Erfindung mit einem luftdurchfluteten Abstandsgewirke in den kreuzschraffierten Flächenbereichen;
- **Fig. 2**: die Aufsicht eines einschließlich der Luftbrücken einstückigen Gewirkezuschnitts;
- **Fig. 3**: einen Schnitt quer zu einer der Abheftungen des in Fig. 1 gezeigten Fahrzeugsitzes; und
- **Fig. 4**: einen Schnitt längs einer der Abheftungen des in Fig. 1 gezeigten Fahrzeugsitzes.

Der in den Fign. gezeigte, aktiv belüftete Fahrzeugsitz besteht aus einem Sitz - und einem Rückenlehnenmodul 1, 2, die jeweils ein luftundurchlässiges Polsterteil 3 aus Schaumstoff, eine dieses in den kreuzschraffierten Flächenbereichen überdeckende, luftdurchflutete Zwischenschicht 4 aus einem grobmaschigen Abstandsgewirke sowie einen seitens der Zwischenschicht 4 luftdurchströmten, insgesamt mit 5 bezeichneten Polsterbezug enthalten, welcher eine von Luftöffnungen 6 durchsetzte Schaumstoffauflage 7 und einen diese überspanenden Bezugsstoff 8 aufweist.

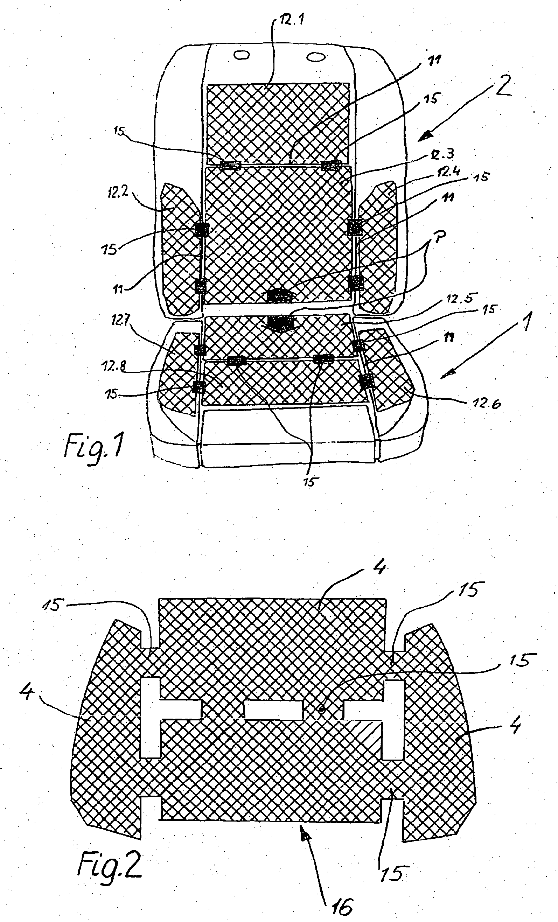

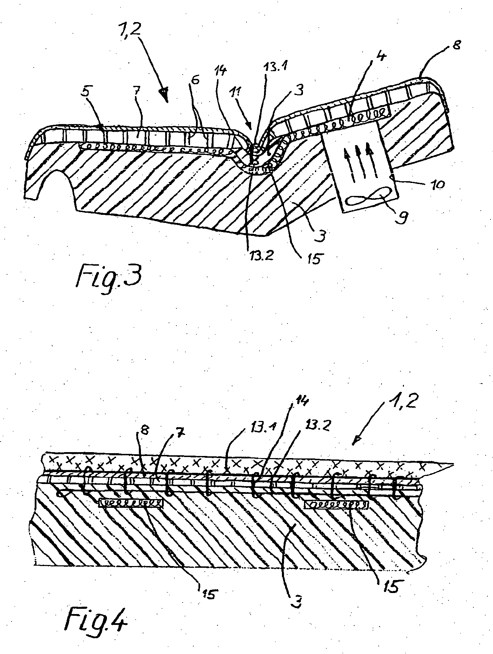

Die Luftzufuhr zum Abstandsgewirke 4 des Sitz- bzw. des Rückenlehnenmoduls 1, 2 erfolgt z. B. an den in Fig. 1 durch Pfeile P angedeuteten Lufteinlassstellen mit Hilfe von Minilüftern 9 (Fig. 3) in einem Luftschacht 10 des Polsterteils 3.

Zum Spannen des Polsterbezugs 5 sind am Sitz- und am Rückenlehnenmodul 1, 2 quer- und längsverlaufende Abheftungen 11 vorgesehen, die den Polsterbezug 5 in einzelne, voneinander abgegrenzte Polsterzonen 12.1....12.8 unterteilen und jeweils auf Seiten des Polsterbezugs 5 einen durchlaufenden Abheftdraht 13.1 aufweisen, der durch zugfeste, aber in Druckrichtung nachgiebige Abheftklammern 14 mit einem weiteren, im Polsterteil 3 durchlaufend eingebetteten Abheftdraht 13.2 zugverspannt ist.

Die in den einzelnen Polsterzonen 12 liegenden Flächenabschnitte der Zwischenschicht 4 sind durch unterhalb der Abheftungen 11 quer zu diesen verlaufende Luftbrücken 15 (in Fig. 1 geschwärzt dargestellt) luftmäßig miteinander verbunden. Damit der Luftaustausch über die Luftbrücken 15 durch die Verankerung der Abheftungen 11 am Polsterteil 3 nicht behindert wird, sind die Luftbrücken 15 vollständig, also auch auf der dem Polsterbezug 5 zugewandten Oberseite, in das Schaumstoffmaterial des Polsterteils 3 eingeschlossen und die Abheftungen 11 sind, wie am deutlichsten aus den Fign. 3 und 4 ersichtlich ist, in dem Material des Polsterteils 3 oberhalb der Luftbrücken 15 verankert. Hierdurch werden die Luftbrücken 15 von den durch die Abheftungen 11 erzeugten Spannkräften freigehalten und eine ausreichende Belüftung sämtllicher Polsterzonen 12 sichergestellt.

Wie Fig. 4 zeigt, ist die Breite der Luftbrücken 15 in Längsrichtung der Abheftungen 11 wesentlich geringer als die Länge der seitlich angrenzenden, luftbrückenfreien Polsterteilbereiche, so dass der Hauptteil der Abheftkräfte nicht von den durch die Luftbrücken untertunnelten, schmäler dimensionierten Wandabschnitten, sondern von den luftbrückenfreien Wandbereichen des Polsterteils 3 aufgenommen und dadurch eine hochstabile Verankerung der Abheftungen 11 am Polsterteil 3 erreicht wird.

Zur Herstellung eines Sitz- oder Rückenlehnenmoduls 1 bzw. 2 wird zunächst ein einstückiger Gewirkezuschnitt aus einem Abstandsgewirke angefertigt, z. B. der Gewirkezuschnitt 16 gemäß Fig.2 für den Sitzmodul 1, welcher einschließlich der Luftbrücken 15 die den einzelnen Polsterzonen 12.5....12.8 des Sitzmoduls 1 entsprechenden Abschnitte der Zwischenschicht 4 umfasst. Anschließend wird der Gewirkezuschnitt 16 gemeinsam mit dem Abheftdraht 13.2 in ein Schäumwerkzeug eingelegt und dort so fixiert, dass die Luftbrücken 15 beim Schäumprozess auch auf der Oberseite vom Schaumstoffmaterial des Polsterteils 3 mitumschlossen werden und der Abheftdraht 13.2 oberhalb der Luftbrücken 15 im Polsterteil 3 eingebettet wird. Um zu verhindern, dass der Schaumstoff beim Schäumprozess in das Abstandsgewirke eindringt, ist der Gewirkezuschnitt 16 an den schaumstoffseitigen Kontaktflächen der Zwischenschicht 4 und der Luftbrücken 15 schaumundurchlässig ausgebildet. Nach dem Anbringen des Polsterbezugs 5 und dem Verspannen der Abheftungen 11 kann der Lüfter 9 montiert und der Sitz fertiggestellt werden.

## Patentansprüche

1. Aktiv belüfteter Fahrzeugsitz, mit einem unteren, luftundurchlässigen Sitz - oder Rückenlehnen-Polsterteil, einer luftdurchfluteten Zwischenschicht und einem Polsterbezug, welcher durch am luftundurchlässigen Polsterteil verankerte Abheftungen in voneinander abgegrenzte Polsterzonen unterteilt ist, wobei zur Verbindung der Zwischenschicht zwischen den einzelnen Polsterzonen quer zu den Abheftungen verlaufende Luftbrücken vorgesehen sind, wobei die Luftbrücken (15) von dem luftundurchlässigen Polsterteil (3) rundum umschlossen sind, **dadurch gekennzeichnet, dass** die Abheftungen (11) oberhalb der Luftbrücken in dem diese abdeckenden, luftundurchlässigen Material des Polsterteils verankert sind, und dass die Zwischenschicht (4) und die Luftbrücken (15) aus einem Abstandsgewirke bestehen.

2. Fahrzeugsitz nach Anspruch 1, **dadurch gekennzeichnet, dass** das Abstandsgewirke der Luftbrücken (15) und das Abstandsgewirke in den Polsterzonen (12) als einstückiger Gewirkezuschnitt (16) gefertigt ist.

3. Fahrzeugsitz nach einem der vorhergehenden Ansprüche, **dadurch gekennzeichnet, dass** die Abheftungen (11) an im luftundurchlässigen Material des Polsterteils (3) oberhalb der Luftbrücken (15) eingebetteten, sich durchgehend längs der Abheftungen erstreckenden Abheftelementen (13.2) verankert sind.

4. Fahrzeugsitz nach einem der vorhergehenden Ansprüche, bei dem das luftundurchlässige Polsterteil aus einem Schaumstoff besteht, **dadurch gekennzeichnet, dass** die Luftbrücken (15) an den schaumstoffseitigen Kontaktflächen schaumundurchlässig ausgebildet sind.

## Claims

1. An actively aerated seat in a vehicle comprising a bottom seat or back upholstery part impermeable to air, an air-permeable intermediate layer and an upholstery cover divided into areas shut off from one another by stitching anchored to the air-impermeable upholstery part, wherein air bridges extending transversely of the stitching are provided in order to connect the layer between the individual upholstery areas, wherein the air bridges (15) are surrounded by the air-impermeable upholstery part (3), **characterised in that** the stitching (11) above the air bridges is anchored in the impermeable material of the upholstery part covering the said air bridges and the intermediate layer (4) and the air bridge (15) are made of a spaced knitted fabric.

2. A seat in a vehicle according to claim 1, **characterised in that** the spaced knitted fabric constituting the air bridges (15) and the spaced knitted fabric in the upholstery areas (12) is in the form of a one-piece knitted blank (16).

3. A seat according to any of the preceding claims, **characterised in that** the stitching (11) is anchored by stitched elements (13.2) embedded in the impermeable material of the upholstery part (3) above the air bridges (15) and extending continuously along the stitching.

4. A seat according to any of the preceding claims, wherein the air-impermeable upholstery part is made of a foam, **characterised in that** the air bridges (15) on the contact sides facing the foam are impermeable to foam.

## Revendications

1. Siège à aération active pour véhicule comportant une partie de garniture d'assise ou de dossier imperméable à l'air, une couche intermédiaire ventilée et un revêtement subdivisant des zones de rembourrage délimitées les unes des autres par des piquages accrochés à la partie de garniture imperméables à l'air,
- des ponts d'air dirigés transversalement aux piquages reliant la couche intermédiaire entre les différentes zones rembourrées, ces ponts d'air (15) étant entourés par la partie rembourrée (3) imperméable à l'air,
siège **caractérisé en ce que**
les piquages (11) sont accrochés au-dessus des ponts d'air dans la matière de la partie rembourrée imperméable à l'air et qui couvre les ponts, et
la couche intermédiaire (4) et les ponts d'air (15) sont réalisés par un tricot d'écartement.

2. Siège de véhicule selon la revendication 1,
**caractérisé en ce que**
le tricot d'écartement des ponts d'air (15) et le tricot d'écartement des zones rembourrées (12) sont sous la forme d'une pièce unique de tricot (16).

3. Siège de véhicule selon l'une des revendications précédentes,
**caractérisé en ce que**
les piquages (11) sont intégrés dans la matière non perméable à l'air de la partie rembourrée (3) au-dessus des ponts d'air (15) en s'accrochant de façon continue à des éléments de piquage (13.2) s'étendant longitudinalement par rapport aux piquages.

4. Siège de véhicule selon l'une des revendications précédentes selon lequel la partie rembourrée imperméable à l'air est en une mousse, siège **caractérisé en ce que**
les ponts d'air (15) sont réalisés sur les surfaces de contact imperméables à l'air, côté mousse.
